# EUROPÄISCHE PATENTSCHRIFT

(11) **EP 2 991 851 B1**
(45) Veröffentlichungstag und Bekanntmachung des Hinweises auf die Patenterteilung: **13.01.2021**
(21) Anmeldenummer: 14718391.7
(22) Anmeldetag: 16.04.2014
(51) Int. Cl.: H01M 2/10, H01M 2/12, B60L 50/64

(54) **HOCHVOLTSPEICHER FÜR EIN FAHRZEUG**
HIGH VOLTAGE ACCUMULATOR FOR A VEHICLE
ACCUMULATEUR HAUTE TENSION POUR VÉHICULE

(30) Priorität: 30.04.2013 DE 102013207872
(43) Veröffentlichungstag der Anmeldung: 09.03.2016
(73) Patentinhaber: Bayerische Motoren Werke Aktiengesellschaft, 80809 München (DE)
(72) Erfinder: WAGNER, Matthias, 80805 München (DE); BEN SALAH, Semi, 85464 Finsing (DE); MINEIF, Harald, 80637München (DE)
(86) Internationale Anmeldenummer: PCT/EP2014/057732
(87) Internationale Veröffentlichungsnummer: WO 2014/177381

(56) Entgegenhaltungen:
- DE-A1-102006 048 291
- DE-A1-102010 034 368
- DE-A1-102010 037 656
- JP-A- 2000 085 375
- KR-A- 20120 050 234
- US-A1- 2004 043 287
- US-A1- 2009 169 978
- US-A1- 2009 236 162
- US-A1- 2012 315 510

## Beschreibung

Vorliegende Erfindung betrifft einen Hochvoltspeicher für ein Fahrzeug sowie ein Fahrzeug, umfassend den Hochvoltspeicher.

In Elektrofahrzeugen und Hybridfahrzeugen werden Hochvoltspeicher für den alleinigen oder unterstützenden Antrieb des Fahrzeugs mittels einer elektrischen Maschine eingesetzt. In den Hochvoltspeichern befinden sich mehrere Energiespeicherzellen oder Energiespeichermodule. Die Energiespeichermodule wiederum fassen mehrere Energiespeicherzellen zusammen. Im Stand der Technik sind die Gehäuse von Hochvoltspeichern in Fahrzeugen aus Metall gefertigt, um so ausreichend Schutz für die Elektronik und die Energiespeicherzellen gegen Umwelteinflüsse zu gewährleisten. Des Weiteren werden Metallgehäuse verwendet, um die Hochvoltkomponenten ausreichend einzukapseln und so die Umgebung zu schützen. Je nach Anwendungsfall werden Gehäuseteile aus Aluminiumdruckguss oder Stahlblech verwendet. Die Druckschrift DE 10 2009 037 138 A1 zeigt ein Gehäuse, wobei die Unterschale mehrschalig, aus Kunststoff- und Metallteilen, aufgebaut ist.

KR 2012 0050234 A zeigt einen Hochvoltspeicher gemäß dem Oberbegriff des Anspruchs 1.

Weiteren relevanten Stand der Technik zeigen JP 2000 085375 A, US 2009/236162 A1 und DE 10 2006 048291 A1.

Es ist Aufgabe vorliegender Erfindung, einen Hochvoltspeicher anzugeben, der bei kostengünstigem und leichtem Aufbau stabil, und insbesondere in einem Crash-Fall ausreichend stabil für den Einsatz in einem Fahrzeug, ist.

Die Lösung der Aufgabe erfolgt durch die Merkmale des unabhängigen Anspruchs. Die abhängen Ansprüche haben vorteilhafte Ausgestaltungen der Erfindung zum Gegenstand.

Somit wird die Aufgabe gelöst durch einen Hochvoltspeicher für ein Fahrzeug. Der Hochvoltspeicher umfasst ein Gehäuse. Das Gehäuse wiederum ist zusammengesetzt aus einer einschaligen, vorzugsweise einstückigen, Unterschale aus Metall und einem die Unterschale verschließenden Deckel aus Kunststoff. Die Unterschale ist einschalig, insbesondere aus Aluminium oder Stahlblech, hergestellt. In dem Gehäuse befinden sich mehrere Energiespeicherzellen und/oder Energiespeichermodule. In dem Energiespeichermodul sind mehrere Energiespeicherzellen zusammengefasst. Die Energiespeicherzellen oder Energiespeichermodule sind direkt in die metallische Unterschale des Gehäuses eingesetzt. Die metallische Unterschale bildet das tragende Bauteil des Hochvoltspeichers, das die Verbindung zur Fahrzeugkarosserie darstellt und crash-sicher ausgestaltet ist. Der Deckel aus Kunststoff ist insbesondere direkt auf die Unterschale aufgesetzt und vorzugsweise direkt mit der Unterschale verbunden, insbesondere verschraubt.

Erfindungsgemäß wurde erkannt, dass der Deckel des Gehäuses des Hochvoltspeichers im Regelfall im Fahrzeug keine Kräfte aufnehmen muss. Der Deckel dient in erster Linie zum Schutz beim Transport und gegen äußere Umwelteinflüsse sowie zur Aufnahme geringer mechanischer Belastungen. Vorbekannte Deckel aus metallischem Werkstoff sind in der Regel überdimensioniert und somit unnötig schwer. Eine Unterschale aus Kunststoff würde den hohen Anforderungen im Fahrzeug nicht gerecht werden. Deshalb wird erfindungsgemäß eine einschalige Unterschale aus Metall verwendet. Direkt auf diese Unterschale aus Metall wird der Deckel aus Kunststoff aufgesetzt. Die am Hochvoltspeicher auftretenden Kräfte aus Betriebsbelastungen, Eigengewicht und sonstigen Einflüssen werden von der Unterschale ausgenommen. Die Unterschale wiederum wird direkt mit der Karosserie eines Fahrzeugs oder über karosseriefeste Haltewinkel mit dem Fahrzeug verbunden.

Erfindungsgemäß ist vorgesehen, dass der Deckel aus faserverstärktem Kunststoff gefertigt ist. Insbesondere wird zur Faserverstärkung Glasfaser oder Kohlefaser verwendet.

Der Deckel ist aus einem faserverstärktem Thermoplast gefertigt. Im Rahmen der Erfindung wurde erkannt, dass ein faserverstärktes thermoplastisches Material für die Belastungen des Deckels ausreicht. Gleichzeitig hat das thermoplastische Material den Vorteil, dass es sehr viel einfacher zu recyceln ist als beispielsweise duroplastischer Kunststoff. Der Deckel wird insbesondere aus langfaserverstärktem Thermoplast gefertigt. Alternativ oder zusätzlich zu der Langfaserverstärkung werden Fasermatten zur Verstärkung des thermoplastischen Kunststoffs eingesetzt. Es ist bevorzugt vorgesehen, dass die Fasern als Matten oder als Bänder eingelegt, eingespritzt oder gemeinsam mit der Kunststoffmatrix verpresst werden. Insbesondere erfolgt die Herstellung des Deckels durch Pressen eines langfaserverstärkten thermoplastischen Materials (D-LFT-Verfahren). Alternativ dazu ist bevorzugt vorgesehen, den Deckel in einer Spritzgussanlage oder in einem Injection-Moulding-Compounder (IMC) zu fertigen.

Für die Herstellung des Deckels ist alternativ oder zusätzlich vorgesehen, dass der Kunststoff physikalisch oder chemisch aufgeschäumt wird. Dieses Aufschäumen erfolgt im Urformprozess des Deckels.

Des Weiteren ist bevorzugt vorgesehen, dass in dem Kunststoff des Deckels ein brandhemmendes Additiv eingemischt ist. Dadurch wird ein Verlöschen des Deckels im Brandfall erzwungen.

Ferner ist bevorzugt vorgesehen, dass der Deckel als einschaliges, vorzugsweise einstückiges, Kunststoffteil gefertigt ist. Es wird somit nur ein einziger Deckel verwendet, um das gesamte Gehäuse, insbesondere dicht, abzuschließen.

Des Weiteren sind in dem Deckel bevorzugt Metallhülsen eingelegt. Diese Metallhülsen befinden sich insbesondere an einem Flansch und werden zur Verschraubung des Deckels mit der Unterschale verwendet. Alternativ zur Verwendung der Metallhülsen erfolgt eine Kunststoffdirektverschraubung, bei der Schrauben von der Unterschale in den Kunststoff des Deckels direkt eingeschraubt werden.

Eine entsprechende Dichtung zwischen dem Deckel und der Unterschale wird bevorzugt direkt am Deckel vormontiert oder vorzugsweise angespritzt. Alternativ dazu ist ein separates Einlegen der Dichtung zwischen den Deckel und die Unterschale vorgesehen.

Der Hochvoltspeicher umfasst vorzugsweise eine Druckausgleichseinheit. Die Druckausgleichseinheit umfasst eine Membran, die gas- und wasserdampfdurchlässig ist, um so den Druck im Inneren des Gehäuses dem Umgebungsdruck anzupassen. In der Druckausgleichseinheit ist die Membran in der Regel in einen Kunststoffrahmen eingesetzt. Im Stand der Technik muss dieser Kunststoffrahmen aufwendig mit dem Metallgehäuse verbunden werden. Im Rahmen vorliegender Erfindung ist bevorzugt vorgesehen, dass das Druckausgleichselement in den Deckel integriert ist. Insbesondere ist das Druckausgleichselement in den Deckel eingelegt oder eingeklebt oder eingeschweißt, z.B. mittels Ultraschallschweißen. Unter "Einlegen" wird verstanden, dass das Druckausgleichselement während dem Herstellen des Deckels bereits in die entsprechende Form mit eingelegt wird, so dass die Druckausgleichseinheit beispielsweise vom Material des Deckels umspritzt wird.

Insbesondere ist vorgesehen, dass die Druckausgleichseinheit lediglich aus der gasdurchlässigen Membran besteht. Da der Deckel aus Kunststoff gefertigt wird, kann diese Membran direkt in den Deckel integriert werden. Die Membran wird beim Herstellen des Deckels entweder direkt eingelegt oder nachträglich auf eine Öffnung im Deckel aufgeklebt oder aufgeschweißt, z.B. mittels Ultraschallschweißen.

Darüber hinaus ist bevorzugt vorgesehen, dass ein Abschnitt des Deckels als "Berstschutz" ausgebildet ist. Hierzu wird der bestimmte Abschnitt des Deckels mit einer sehr dünnen Materialstärke ausgebildet. Insbesondere weist der Deckel im Bereich des Berstschutzes eine Materialstärke kleiner 3 mm auf. Bei entsprechend großem Überdruck im Gehäuse bricht der Deckel genau in dem Bereich des Berstschutzes auf. Es muss also so kein separates Bauteil für den Berstschutz eingebaut werden.

Um das Gewicht des Hochvoltspeichers größtmöglich zu reduzieren, weist die Unterschale aus Metall ein möglichst geringes Hüllvolumen auf, wohingegen der Deckel aus Kunststoff ein möglichst großes Hüllvolumen aufweist. Insbesondere ist vorgesehen, dass das Hüllvolumen des Deckels zumindest 100%, vorzugsweise zumindest 125%, besonders vorzugsweise zumindest 150%, des Hüllvolumens der Unterschale beträgt. Dadurch ist sichergestellt, dass der Deckel zumindest das gleiche Volumen umhüllt wie die Unterschale und dementsprechend ein entscheidender Anteil des Gehäuses aus Kunststoff gefertigt ist.

Durch Geometrie, Wandstärke, Faseranteil, Faserlänge oder Additive können bevorzugt die benötigten mechanischen und chemischen Eigenschaften des Deckels genau an die Anforderungen angepasst werden. Durch die Fertigung des Deckels aus Kunststoff können verschiedene Schnittstellen, z.B. die Dichtung, leichter in den Deckel integriert werden, da Kunststoffe generell eine höhere Gestaltungsfreiheit zulassen. Durch Verrippungen, lokale Fasereinlagen, Fasermatten oder andere Verstärkungen, kann der Deckel an relevanten Bereichen lokal verstärkt werden, ohne dadurch das ganze Bauteil zu verändern und das Gewicht gesamthaft zu erhöhen. Durch die Gewichtsersparnis und die gleichzeitige Integration von Schnittstellen in den Deckel, vereinfacht sich zusätzlich die Produktion, da entsprechende Produktions- und Montageschritte entfallen können. Wie erläutert, können beispielsweise die Membran des Druckausgleichselementes oder ein Berstschutz direkt in den Deckel integriert werden.

Die Erfindung umfasst des Weiteren ein Fahrzeug mit dem soeben beschriebenen Hochvoltspeicher. In dem Fahrzeug ist der Hochvoltspeicher mit einer elektrischen Maschine verbunden. Die elektrische Maschine wiederum dient zum alleinigen oder unterstützenden Antrieb des Fahrzeugs. Dementsprechend ist das Fahrzeug als Hybridfahrzeug oder Elektrofahrzeug ausgebildet. Die aus Metall gefertigte Unterschale des Gehäuses des Hochvoltspeichers ist in der Karosserie des Fahrzeugs befestigt. Hierzu liegt die Unterschale, insbesondere mit dem Flansch, entweder direkt auf der Karosserie auf, oder in die Karosserie werden entsprechende Halteelemente eingesetzt, auf denen die Unterschale aufliegt.

Die Bauteile im Inneren des Hochvoltspeichers, insbesondere die Energiespeicherzellen oder Energiespeichermodule, werden bevorzugt in der Unterschale befestigt. Die Unterschale wiederum wird direkt im Fahrzeug befestigt, wodurch das Fahrzeug über die Unterschale direkt die Hauptlasten aufnimmt. Die Gestaltung des Deckels aus Kunststoff, lässt eine sehr genaue und flexible Anpassung an die Anforderungen im jeweiligen Kraftfahrzeug zu.

Weitere Einzelheiten, Merkmale und Vorteile der Erfindung ergeben sich aus der nachfolgenden Beschreibung und den Figuren. Es zeigen:
- Figur 1: eine schematisch vereinfachte Darstellung eines erfindungsgemäßen Hochvoltspeichers gemäß einem Ausführungsbeispiel;
- Figur 2: ein erstes Detail des erfindungsgemäßen Hochvoltspeichers gemäß dem Ausführungsbeispiel;

- Figur 3: ein zweites Detail des erfindungsgemäßen Hochvoltspeichers gemäß dem Ausführungsbeispiel; und
- Figur 4: ein drittes Detail des erfindungsgemäßen Hochvoltspeichers gemäß dem Ausführungsbeispiel.

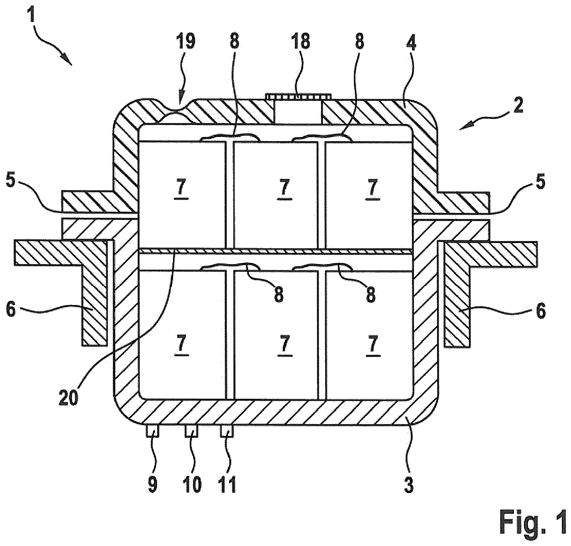

Figur 1 zeigt in schematisch stark vereinfachter Ansicht einen Schnitt durch einen Hochvoltspeicher 1.

Der Hochvoltspeicher 1 weist ein Gehäuse 2 auf. Das Gehäuse 2 setzt sich zusammen aus einer Unterschale 3 und einem Deckel 4. Die Unterschale 3 ist aus Metall, insbesondere aus Aluminiumdruckguss oder aus Stahl, gefertigt. Über einen Flansch 5 verschließt der Deckel 4 die Unterschale 3. An dem Flansch 5 ist insbesondere eine nicht dargestellte Dichtung vorgesehen. Der Deckel 4 ist aus einem faserverstärkten Kunststoff gefertigt.

Haltewinkel 6 in Figur 1 stellen karosseriefeste Teile eines Fahrzeugs dar. Die Unterschale 3 liegt mit dem Flansch 5 auf diesen Haltewinkeln 6 auf. Insbesondere wird die Unterschale 3 fest mit den Haltewinkeln 6 verbunden, insbesondere verschweißt oder verschraubt.

Im Inneren des Gehäuses 2 befinden sich mehrere Energiespeichermodule 7. In jedem Energiespeichermodul 7 sind mehrere Energiespeicherzellen zusammengefasst. Die mehreren Energiespeichermodule sind untereinander mittels Verbindungen 8 elektrisch leitend verbunden.

Am Gehäuse 2 befinden sich ein Hochvoltanschluss 9, ein Steuerleitungsanschluss 10 und ein Kühlmittelanschluss 11. Anstatt wie in Figur 1 dargestellt, kann der Hochvoltanschluss 9 und/oder der Steuerleitungsanschluss 10 und/oder der Kühlmittelanschluss 11 auch am Deckel 4 ausgebildet sein.

Des Weiteren zeigt Figur 1, dass in den Deckel 4 eine Membran 18 und ein Berstschutz 19 integriert sind. Die Membran 18 ist gasdurchlässig und stellt ein Druckausgleichselement dar. Der Berstschutz 19 ist gebildet durch einen Abschnitt des Deckels 4 mit einer sehr dünnen Materialstärke. Bei entsprechendem Überdruck im Gehäuse 2 reißt der Deckel 4 am Berstschutz 19 auf.

Figur 1 zeigt des Weiteren im Gehäuse 2 einen Zwischenboden 20. Auf dem Zwischenboden 20 sind Energiespeichermodule 7 angeordnet, so dass mehrere Energiespeichermodule 7 übereinander angeordnet werden können. Der Zwischenboden 20 ist insbesondere mit der Unterschale 3 fest verbunden, so dass der Deckel 4 möglichst wenig Lasten aufnehmen muss.

Figur 1 zeigt eine Darstellung, in der der Deckel 4 ein geringeres Hüllvolumen aufweist, als die Unterschale 3. Um das Gewichtseinsparungspotential der Konstruktion möglichst auszunutzen, ist entgegen der Darstellung bevorzugt vorgesehen, dass der Deckel 4 ein gleich großes oder größeres Hüllvolumen als die Unterschale 3 aufweist.

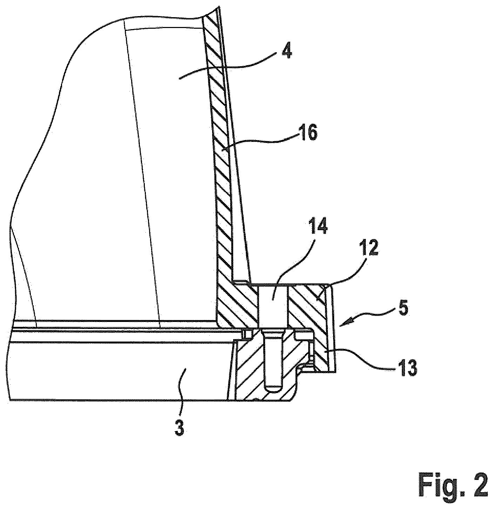

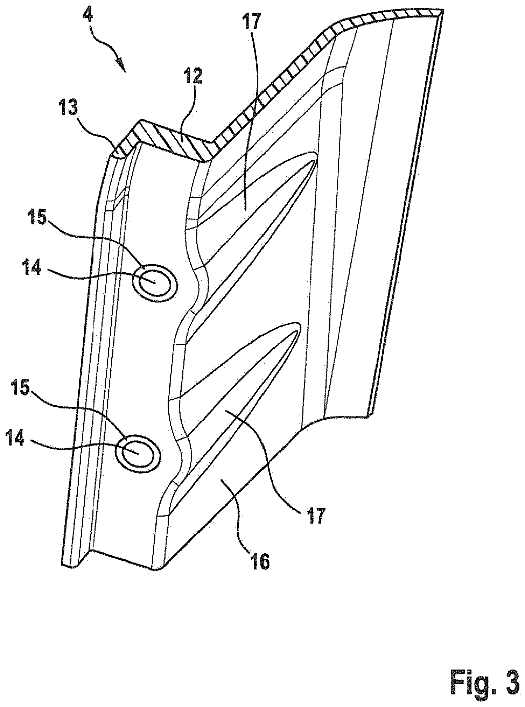

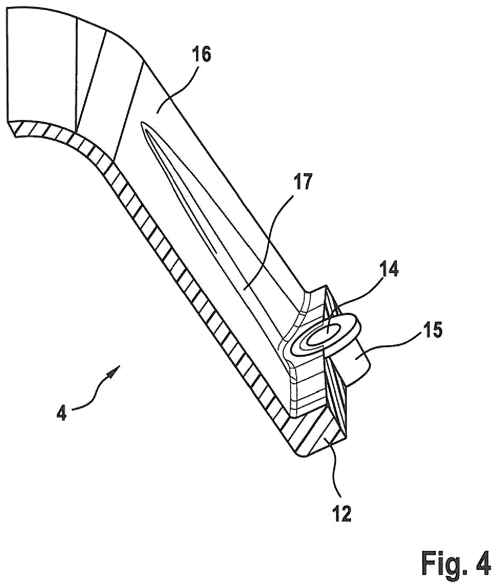

Die Figuren 2 bis 4 zeigen drei unterschiedliche Details des Hochvoltspeichers 1. In Figur 2 ist ein Schnitt durch den Flansch 5 dargestellt. Figur 3 zeigt den Deckel 4 im Bereich des Flansches 5. Figur 4 zeigt den Deckel 4, wobei der Flansch 5 teilweise aufgeschnitten dargestellt ist.

Der Deckel 4 weist eine Seitenwand 16 auf. Von dieser Seitenwand 16 steht ein Verschraubungsanteil 12 ab. Den seitlichen Abschluss des Deckels 4 bildet ein umlaufender Kragen 13, der gegenüber dem Verschraubungsanteil 12 abgewinkelt ist. Der Verschraubungsanteil 12 und der Kragen 13 bilden den Flansch 5 am Deckel 4.

In dem Verschraubungsanteil 12 sind mehrere Löcher 14 zum Verschrauben mit der Unterschale 3 ausgebildet. Wie insbesondere Figur 4 zeigt, sind die Löcher 14 durch Metallhülsen 15 gebildet.

Der Kragen 13 umgreift die Unterschale 3 und stellt somit eine Montierungshilfe beim Aufsetzen des Deckels 4 auf die Unterschale 3 dar.

Insbesondere die Figuren 3 und 4 zeigen mehrere Wölbungen 17 in einer Seitenwand 16 des Deckels 4. An den Wölbungen 17 ist die Seitenwand 16 nach Innen gewölbt, so dass zum einen mit einem Werkzeug die Löcher 14 zugänglich sind und zum anderen konstante Wandstärken auch im Bereich der Löcher 14 und der Metallhülsen 15 möglich sind.

### Bezugszeichenliste

- 1: Hochvoltspeicher
- 2: Gehäuse
- 3: Unterschale
- 4: Deckel
- 5: Flansch
- 6: Haltewinkel
- 7: Energiespeichermodule
- 8: Verbindungen
- 9: Hochvoltanschluss
- 10: Steuerleitungsanschluss
- 11: Kühlmittelanschluss
- 12: Verschraubungsanteil
- 13: Kragen
- 14: Loch
- 15: Metallhülsen
- 16: Seitenwand
- 17: Wölbung
- 18: Membran
- 19: Berstschutz
- 20: Zwischenboden

## Patentansprüche

1. Hochvoltspeicher (1) für ein Fahrzeug, umfassend
- ein Gehäuse (2) mit einer einschaligen Unterschale (3) aus Metall und einem die Unterschale (3) verschließenden Deckel (4) aus Kunststoff, und
- mehrere in dem Gehäuse (2) angeordnete Energiespeicherzellen und/oder Energiespeichermodule (7),
**dadurch gekennzeichnet, dass** der Deckel (4) aus faserverstärktem Thermoplast gefertigt ist.

2. Hochvoltspeicher nach Anspruch 1, **dadurch gekennzeichnet, dass** der Deckel (4) aus einem langfaserverstärktem Thermoplast gefertigt ist.

3. Hochvoltspeicher nach einem der vorhergehenden Ansprüche, **dadurch gekennzeichnet, dass** der Deckel (4) ein einschaliges Kunststoffteil ist.

4. Hochvoltspeicher nach einem der vorhergehenden Ansprüche, **dadurch gekennzeichnet, dass** in den Deckel (4) Metallhülsen (15) zur Verschraubung mit der Unterschale (3) eingelegt sind.

5. Hochvoltspeicher nach einem der vorhergehenden Ansprüche, **dadurch gekennzeichnet, dass** in den Deckel (4) eine Druckausgleichseinheit integriert, vorzugsweise eingeklebt oder eingelegt, ist.

6. Hochvoltspeicher nach Anspruch 6, **dadurch gekennzeichnet, dass** die Druckausgleichseinheit durch eine gasdurchlässige Membran (18) gebildet ist, wobei die Membran (18) direkt in den Deckel (4) integriert, vorzugsweise eingeklebt oder eingelegt, ist.

7. Hochvoltspeicher nach einem der vorhergehenden Ansprüche, **dadurch gekennzeichnet, dass** ein Abschnitt des Deckels (4) als Berstschutz (19) ausgebildet ist, wobei die Materialstärke des Deckels (4) am Berstschutz (19) für ein Aufbrechen bei entsprechendem Überdruck im Gehäuse (2) ausgebildet ist.

8. Hochvoltspeicher nach einem der vorhergehenden Ansprüche, **dadurch gekennzeichnet, dass** der Deckel (4) ein erstes Hüllvolumen des Gehäuses (2) und die Unterschale (3) ein zweites Hüllvolumen des Gehäuses (2) definieren, wobei das erste Hüllvolumen zumindest 100%, vorzugsweise zumindest 125%, besonders vorzugsweise zumindest 150%, des zweiten Hüllvolumens beträgt.

9. Fahrzeug umfassend einen Hochvoltspeicher (1) nach einem der vorhergehenden Ansprüche, wobei die Unterschale (3) des Gehäuses (2) in der Karosserie des Fahrzeugs befestigt ist.

10. Fahrzeug nach Anspruch 9, umfassend eine elektrische Maschine zum alleinigen oder unterstützenden Antrieb des Fahrzeugs, wobei der Hochvoltspeicher mit der elektrischen Maschine verbunden ist.

## Claims

1. High-voltage battery (1) for a vehicle, comprising
- a housing (2) with a single-shell bottom shell (3) composed of metal and a cover (4) composed of plastic which closes the bottom shell (3), and
- a plurality of energy storage cells and/or energy storage modules (7) which are arranged in the housing (2),
**characterized in that** the cover (4) is manufactured from fibre-reinforced thermoplastic.

2. High-voltage battery according to Claim 1, **characterized in that** the cover (4) is manufactured from a long-fibre-reinforced thermoplastic.

3. High-voltage battery according to either of the preceding claims, **characterized in that** the cover (4) is a single-shell plastic part.

4. High-voltage battery according to one of the preceding claims, **characterized in that** metal sleeves (15) for screw connection to the bottom shell (3) are fitted into the cover (4).

5. High-voltage battery according to one of the preceding claims, **characterized in that** a pressure-equalization unit is integrated, preferably adhesively bonded or fitted, into the cover (4).

6. High-voltage battery according to Claim 6, **characterized in that** the pressure-equalization unit is formed by a gas-permeable membrane (18), wherein the membrane (18) is integrated, preferably adhesively bonded or fitted, directly into the cover (4).

7. High-voltage battery according to one of the preceding claims, **characterized in that** a section of the cover (4) is designed as a burst-protection means (19), wherein the material thickness of the cover (4) at the burst-protection means (19) is designed to break open given a corresponding excess pressure in the housing (2).

8. High-voltage battery according to one of the preceding claims, **characterized in that** the cover (4) defines a first envelope volume of the housing (2) and the bottom shell (3) defines a second envelope volume of the housing (2), wherein the first envelope volume is at least 100%, preferably at least 125%, particularly preferably at least 150%, of the second envelope volume.

9. Vehicle comprising a high-voltage battery (1) according to one of the preceding claims, wherein the bottom shell (3) of the housing (2) is mounted in the chassis of the vehicle.

10. Vehicle according to Claim 9, comprising an electrical machine for sole or assistive driving of the vehicle, wherein the high-voltage battery is connected to the electrical machine.

## Revendications

1. Accumulateur haute tension (1) pour un véhicule, comprenant :
- un boîtier (2) doté d'une coque inférieure à paroi simple (3) en métal et d'un couvercle (4) en matière plastique fermant la coque inférieure (3), et
- plusieurs éléments d'accumulateur d'énergie et/ou modules d'accumulateur d'énergie (7) agencés dans le boîtier (2),
**caractérisé en ce que** le couvercle (4) est réalisé en matière thermoplastique renforcée par des fibres.

2. Accumulateur haute tension selon la revendication 1, **caractérisé en ce que** le couvercle (4) est fabriqué en matière thermoplastique renforcée par des fibres longues.

3. Accumulateur haute tension selon l'une quelconque des revendications précédentes, **caractérisé en ce que** le couvercle (4) est une pièce en matière plastique à paroi simple.

4. Accumulateur haute tension selon l'une quelconque des revendications précédentes, **caractérisé en ce que** des douilles métalliques (15) sont insérées dans le couvercle (4) en vue du vissage avec la coque inférieure (3).

5. Accumulateur haute tension selon l'une quelconque des revendications précédentes, **caractérisé en ce qu'**une unité d'égalisation de pression est intégrée, de préférence collée ou insérée, dans le couvercle (4).

6. Accumulateur haute tension selon la revendication 6, **caractérisé en ce que** l'unité d'égalisation de pression est formée par une membrane (18) perméable au gaz, la membrane (18) étant intégrée directement, de préférence collée ou insérée, dans le couvercle (4).

7. Accumulateur haute tension selon l'une quelconque des revendications précédentes, **caractérisé en ce qu'**une partie du couvercle (4) est réalisée sous forme de dispositif anti-éclatement (19), l'épaisseur du couvercle (4) au niveau du dispositif anti-éclatement (19) étant réalisée pour un éclatement à une surpression correspondante dans le boîtier (2).

8. Accumulateur haute tension selon l'une quelconque des revendications précédentes, **caractérisé en ce que** le couvercle (4) définit un premier volume englobant du boîtier (2), et la coque inférieure (3) définit un deuxième volume englobant du boîtier (2), le premier volume englobant correspondant à au moins 100 %, de préférence à au moins 125 %, de manière particulièrement préférée à au moins 150 % du deuxième volume englobant.

9. Véhicule, comprenant un accumulateur haute tension (1) selon l'une quelconque des revendications précédentes, dans lequel la coque inférieure (3) du boîtier (2) est fixée dans la carrosserie du véhicule.

10. Véhicule selon la revendication 9, comprenant une machine électrique destinée à l'entraînement unique ou auxiliaire du véhicule, l'accumulateur haute tension étant relié à la machine électrique.
